# EUROPEAN PATENT APPLICATION

(11) **EP 3 576 408 A1**
(43) Date of publication of application: **04.12.2019**
(21) Application number: 18305673.8
(22) Date of filing: 31.05.2018
(51) Int. Cl.: H04N 19/122, H04N 19/129, H04N 19/159, H04N 19/18

(54) **ADAPTIVE TRANSFORMATION AND COEFFICIENT SCAN ORDER FOR VIDEO CODING**

(71) Applicant: InterDigital VC Holdings, Inc., Wilmington, Delaware 19809 (US)
(72) Inventor: LELEANNEC, Fabrice, 35576 Cesson-Sévigné (FR); POIRIER, Tangi, 35576 Cesson-Sévigné (FR); CHEN, Ya, 35576 Cesson-Sévigné (FR)
(74) Representative: Huchet, Anne

(57) **Abstract**

A method and an apparatus for coding a video are disclosed. At least one transform subblock in a block of a picture of the video is determined (1600) depending on a shape of the block and the block is coded (1630) based at least on the determined transform subblock. Corresponding decoding method and apparatus are disclosed.

## Description

### 1. Technical field

A method and an apparatus for coding a video into a bitstream are disclosed. Corresponding decoding method and apparatus are further disclosed.

### 2. Background art

In the field of video compression, compression efficiency is always a challenging task.

In existing video coding standards, pictures to be coded are divided into regular square blocks or units. Prediction, transformation of error residues and quantization are commonly performed on such square units. Quantized transform coefficients are then entropy coded to further reduce the bitrate. When it comes to the coding stage of the quantized transform coefficients, several schemes have been proposed wherein parsing of the coefficients in the square unit plays an important role for optimizing the coding syntax and the information to encode for reconstructing the coefficients.

With the emergence of new video coding schemes, the units used for encoding may not be always a square unit and rectangular units may be used for prediction and transformation. It appears that the classical parsing schemes defined for square units may no more be appropriate in the case where rectangular units are used.

Therefore there is a need for a new method for coding and decoding a video.

### 3. Summary

According to an aspect of the present disclosure, a method for coding a video is disclosed. Such a method comprises determining at least one transform subblock in a block of a picture of the video, and coding said block based at least on said at least one transform subblock, wherein determining at least one transform subblock depends on a shape of said block.

According to another aspect of the present disclosure, an apparatus for coding a video is disclosed. Such an apparatus comprises means for determining at least one transform subblock in a block of a picture of the video, and means for coding said block based at least on said at least one transform subblock, wherein determining at least one transform subblock depends on a shape of said block.
According to an aspect of the present disclosure, an apparatus for coding a video is provided, the apparatus including a processor, and at least one memory coupled to the processor, the processor being configured to determine at least one transform subblock in a block of a picture of the video, and to code said block based at least on said at least one transform subblock, wherein determining at least one transform subblock depends on a shape of said block.

According to another aspect of the present disclosure, a method for decoding a video is disclosed. Such a method comprises determining at least one transform subblock in a block of a picture of the video, and decoding said block based at least on said at least one transform subblock, wherein determining at least one transform subblock depends on a shape of said block.

According to another aspect of the present disclosure, an apparatus for decoding a video is disclosed. Such an apparatus comprises means for determining at least one transform subblock in a block of a picture of the video, and means for decoding said block based at least on said at least one transform subblock, wherein determining at least one transform subblock depends on a shape of said block.

According to an aspect of the present disclosure, an apparatus for decoding a video is provided, the apparatus including a processor, and at least one memory coupled to the processor, the processor being configured to determine at least one transform subblock in a block of a picture of the video, and to decode said block based at least on said at least one transform subblock, wherein determining at least one transform subblock depends on a shape of said block.

According to an aspect of the present disclosure, an apparatus is provided, the apparatus including a processor, and at least one memory coupled to the processor, the processor being configured to determine at least one transform subblock in a block of a picture of the video, and to decode said block based at least on said at least one transform subblock, wherein determining at least one transform subblock depends on a shape of said block; and a display configured to display the decoded block.

According to an aspect of the present disclosure, an apparatus is provided, the apparatus including a tuner configured to tune a specific channel that includes a video signal; a processor, and at least one memory coupled to the processor, the processor being configured to determine at least one transform subblock in a block of a picture of the video signal, and to decode said block based at least on said at least one transform subblock, wherein determining at least one transform subblock depends on a shape of said block.

According to an aspect of the present disclosure, an apparatus is provided, the apparatus including an antenna configured to receive a video signal over the air; a processor, and at least one memory coupled to the processor, the processor being configured to determine at least one transform subblock in a block of a picture of the video signal, and to decode said block based at least on said at least one transform subblock, wherein determining at least one transform subblock depends on a shape of said block.

The present disclosure also concerns a computer program comprising software code instructions for performing the method for coding a video according to any one of the embodiments disclosed below, when the computer program is executed by a processor.

The present disclosure also concerns a computer program comprising software code instructions for performing the method for decoding a video according to any one of the embodiments disclosed below, when the computer program is executed by a processor.

According to an aspect of the present disclosure, a bitstream formatted to include encoded data representative of a block of a picture, the encoded data being encoded by determining at least one transform subblock in a block of a picture of the video, and by coding said block based at least on said at least one transform subblock, wherein determining at least one transform subblock depends on a shape of said block.

According to an aspect of the present disclosure, a signal including a bitstream formatted to include encoded data representative of a block of a picture, the encoded data being encoded by determining at least one transform subblock in a block of a picture of the video, and by coding said block based at least on said at least one transform subblock, wherein determining at least one transform subblock depends on a shape of said block.

According to an aspect of the present disclosure, an apparatus is provided, the apparatus including an accessing unit configured to access data including a block of a picture of the video; and a transmitter configured to transmit the data including encoded data representative of the block of a picture, the encoded data being encoded by determining at least one transform subblock in a block of a picture of the video, and by coding said block based at least on said at least one transform subblock, wherein determining at least one transform subblock depends on a shape of said block.

The above presents a simplified summary of the subject matter in order to provide a basic understanding of some aspects of subject matter embodiments. This summary is not an extensive overview of the subject matter. It is not intended to identify key/critical elements of the embodiments or to delineate the scope of the subject matter. Its sole purpose is to present some concepts of the subject matter in a simplified form as a prelude to the more detailed description that is presented later.

Additional features and advantages of the present disclosure will be made apparent from the following detailed description of illustrative embodiments which proceeds with reference to the accompanying figures.

### 4. Brief description of the drawings

Figure 1 illustrates an exemplary encoder according to an embodiment of the present disclosure,
Figure 2 illustrates an exemplary decoder according to an embodiment of the present disclosure,
Figure 3 illustrates a Coding Tree Units and and Coding Tree used for representing a coded picture according to the HEVC standard,
Figure 4 illustrates a division of a Coding Tree Unit into Coding Units, Prediction Units and Transform Units,
Figure 5 illustrates a Quad-Tree Plus Binary Tree (QTBT) CTU representation,
Figure 6 illustrates a representation of a 16x16 Coding Unit with 8x8 TUs and 4x4 TSBs in HEVC,
Figure 7 illustrates a representation of a 16x8 Coding Unit with 4x4 TSBs in the JEM6.0,
Figure 8 illustrates a representation of a 2x8 Coding Unit with 2x2 TSBs in JEM6.0,
Figure 9 illustrates scanning orders supported by the HEVC standard in an 8x8 Transform Block,
Figure 10 illustrates a transform block 8x16 with 2x8 Transform Subblocks (TSB) according to an embodiment of the present disclosure,
Figure 11 illustrates a transform block 8x16 with mixed TSB sizes according to another embodiment of the present disclosure,
Figure 12 illustrates a representation of 2x8 Coding Unit with 2x2 TSB in JEM6.0,
Figure 13 illustrates a transform block for 2x8 block with 2x8 TSB according to another embodiment of the present disclosure,
Figure 14 illustrates a mix of 2x8 and 2x4 TSB for a 2x12 block according to another embodiment of the present disclosure,
Figure 15 illustrates a vertical scan with 2x8 TSB for a horizontal intra mode prediction according to another embodiment of the present disclosure,
Figure 16 illustrates an exemplary method for coding or decoding a video according to an embodiment of the present disclosure,
Figure 17 illustrates an exemplary system for coding and/or decoding a video according to an embodiment of the present disclosure.

### 5. Description of embodiments

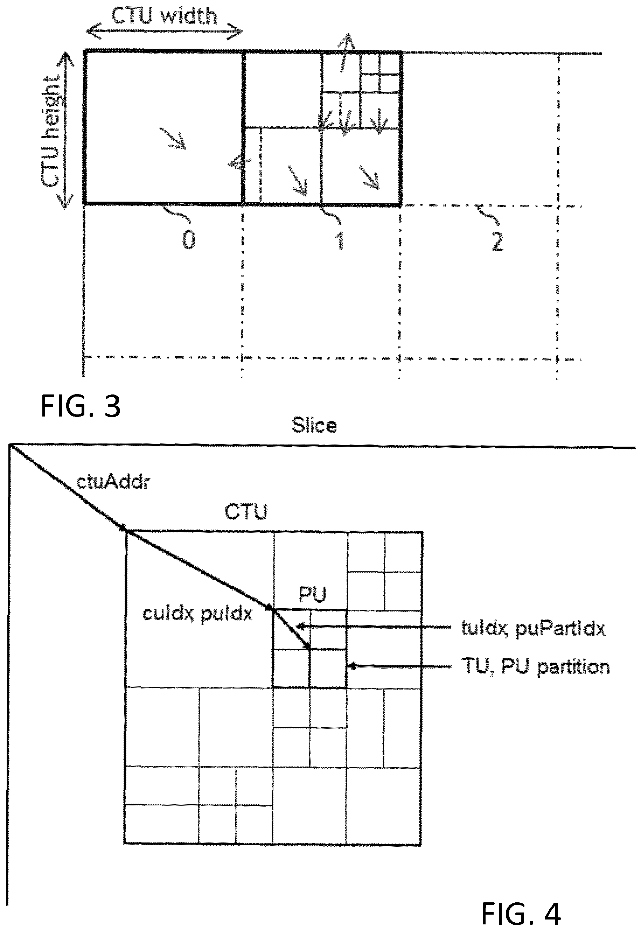

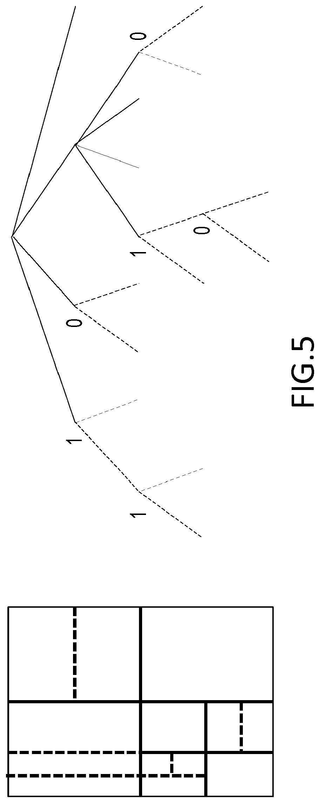

At least one embodiment relates to the field of video compression. More particularly, at least one such embodiment relates to an improved compression efficiency compared to existing video compression systems.
At least one embodiment proposes an adaptation of the Transform Sub Block Size.
In the HEVC video compression standard *(ITU-T H.265 TELECOMMUNICATION STANDARDIZATION SECTOR OF ITU (10*/*2014), SERIES H: AUDIOVISUAL AND MULTIMEDIA SYSTEMS, Infrastructure of audiovisual services* - *Coding of moving video, High efficiency video coding, Recommendation ITU-TH.265),* a picture is divided into so-called Coding Tree Units (CTU), which size is typically 64x64, 128x128, or 256x256 pixels. Each CTU is represented by a Coding Tree in the compressed domain. Such a codign Tree is a quad-tree division of the CTU, where each leaf is called a Coding Unit (CU), as illustrated in Figure 3.
Each CU is then given some Intra or Inter prediction parameters (Prediction Info). To do so, the CU is spatially partitioned into one or more Prediction Units (PUs), each PU being assigned some prediction information. The Intra or Inter coding mode is assigned on the CU level, as illustratd in Figure 4 showing a CTU in a picture to encode partitionned into CU, and CUs partitionned into PU and TU (Transform Unit).
New emerging video compression tools include a Coding Tree Unit representation in the compressed domain in order to represent picture data in a more flexible way in the compressed domain. An advantage of such a representation of the coding tree is that it provides increased compression efficiency compared to the CU/PU/TU arrangement of the HEVC standard.
A Quad-Tree plus Binary-Tree (QTBT) coding tool has been proposed in *"*Algorithm Description of Joint Exploration Test Model 3", Document JVET-C1001_v3, Joint Video Exploration Team of ISO/IECJTC1/SC29/WG11, 3rd meeting, 26 May- 1 June 2015, Geneva, CH*.* Such a representation provides an increased flexibility. It consists in a coding tree wherein coding units can be split both in a quad-tree and in a binary-tree fashion. Such coding tree representation of a Coding Tree Unit is illustrated on Figure 5.

The splitting of a coding unit is decided on the encoder side through a rate distortion optimization procedure that determines the QTBT representation of the CTU with minimal rate distortion cost.

In the QTBT technology, a CU has either square or rectangular shape. The size of coding unit is a power of 2, and typically goes from 4 to 128.
In addition to this variety of rectangular shapes for a coding unit, the new CTU representation has the following different characteristics compared to the HEVC standard.
- The QTBT decomposition of a CTU is made of two stages: first the CTU is split in a quad-tree fashion, then each quad-tree leaf can be further divided in a binary fashion. This is illustrated on the right of Figure 5 where solid lines represent the quad-tree decomposition phase and dashed lines represent the binary decomposition that is spatially embedded in the quad-tree leaves.
- In intra slices, the Luma and Chroma block partitioning structure is separated, and decided independently.
- No more CU partitioning into prediction units or transform units is employed. In other words, each Coding Unit is systematically made of a single prediction unit (2Nx2N prediction unit partition type) and single transform unit (no division into a transform tree).

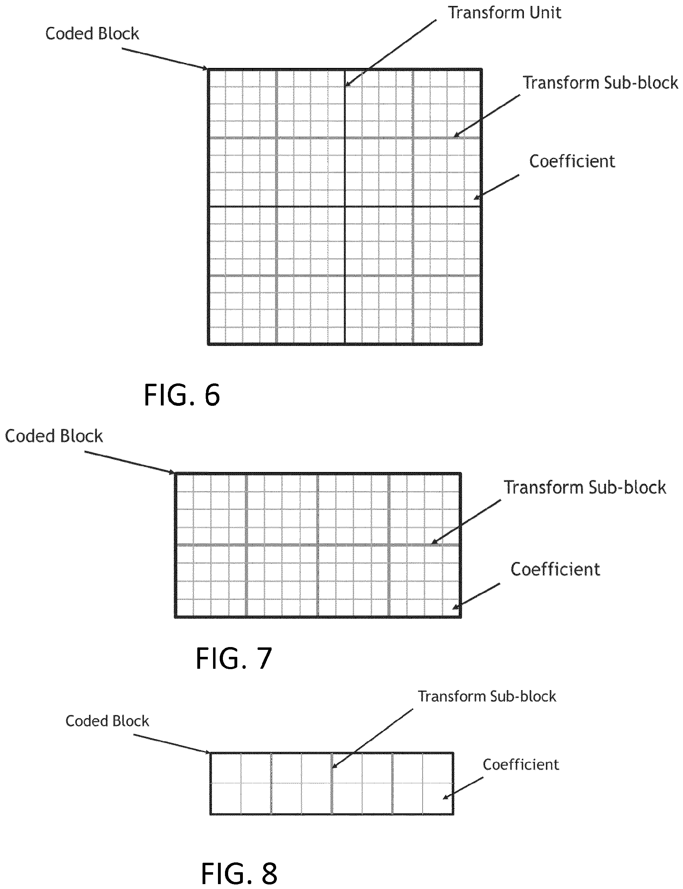

In HEVC, as illustrated in Figure 6, transform coefficients are coded with a hierarchical approach. A Coded block flag (cbf) is signaled to indicate if the block (Coded Block in Figure 6) has at least one non-zero coefficient. Transform blocks (i.e. Tranform Unit) larger than 4x4 are partitioned into several 4x4 coefficients called **transform sub-blocks** (TSBs).
A coded sub-block flag indicates that there is at least one non-zero coefficient inside the TSB or not. Then for each coefficient inside the TSB, a significant coefficient flag is coded to specify the significance of this coefficient. Then the greaterThanOne, greaterThanTwo flags, the remaining value, and the sign of each coefficient are coded.
In the Joint Video Exploration Team model JEM, there is no more Transform Unit. Rectangular blocks are introduced as shown in Figure 7.
Some blocks may have one side of size 2 especially for chroma component as depicted by the example of Figure 8. In this kind of block, Transform Sub-blocks have a size of 2x2.

According to the present principle, at least one embodiment efficiently encodes the transform coefficients contained in the rectangular blocks where square TSBs are not adapted to the shape of the block, in a way that provides good compression efficiency (in terms of rate distortion performance) together with a low or minimum complexity increase of the coding design.
Furthermore, for blocks of size 2xN or Nx2 with 2x2 TSBs, the cost of the significance map is higher and rate distortion optimization is not performed so the performance is sub-optimal.

According to the present principle, at least one implementation adapts the shape and the size of the Transform Sub-blocks to the block size in the coding of the transform coefficients. In another variant of the embodiment, transform sub blocks sizes are different inside a non-square coding block. In the top-left square, 4x4 TSBs are used. In the remaining rectangular sub block, rectangular TSBs are used.
For blocks with one dimension equal to 2, if the number of coefficients is a multiple of 16 (for example 2x8), Transform Sub-block size can be changed from 2x2 to 2x8. In this case, we can reduce the number of TSBs and hence reduce the total syntax used to code the block.
In various embodiments, the adaptation of the Transform Sub-block size also depends on the intra prediction modes, in order to follow the scanning direction of the coefficients.

The following describes at least one implementation. It is organized as follows. First the entropy coding of quantized coefficients is described. Then, different embodiments for the adaptive size of Transform Sub-blocks are proposed.
According to an embodiment, adaptive Transform Sub-Blocks sizes are used depending on the size of the block.
According to another embodiment, TSB size is modified for the block of size 2xN or Nx2. For the last one, the shape of the TSB depends on the intra prediction mode.

We now describes how the quantized coefficients, contained in a so-called transform-block (TB) are scanned at the encoder and decoder according to an embodiment of the present disclosure.
First, a transform block is divided into 4x4 sub-blocks of quantized coefficients called Transform Sub-Block. The entropy coding/decoding is made of several scanning passes, which scan the Transform Block according to a scan pattern selected among several possible scan patterns.
Transform coefficient coding in HEVC involves five main steps: scanning, last significant coefficient coding, significance map coding, coefficient level coding and sign data coding.

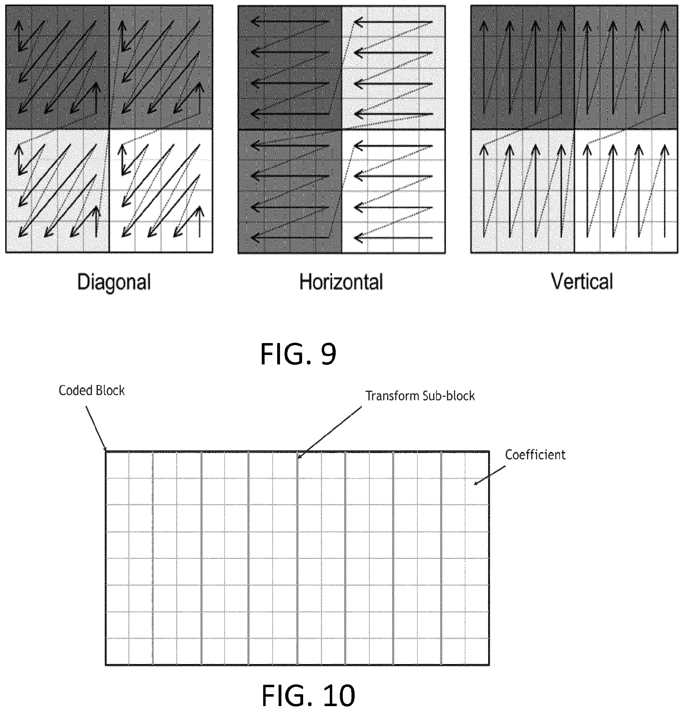

Figure 9 illustrates scanning orders supported by the HEVC standard in an 8x8 Transform Block. Diagonal, Horizontal and Vertical scanning order of the transform block are possible.
For inter blocks, the diagonal scanning on the left of Figure 9 is used, while for 4x4 and 8x8 intra block, the scanning order depends on the Intra Prediction mode active for that block. Horizontal modes use the vertical scan and vertical modes use horizontal scan, diagonal modes use diagonal scan.
A scan pass over a TB then includes processing each TSB sequentially according to one of the three scanning orders (diagonal, horizontal, vertical), and the 16 coefficients inside each TSB are scanned according to the considered scanning order as well. A scanning pass starts at the last significant coefficient in the TB, and processes all coefficients until the DC coefficient.
The scanning of the transform coefficients in a Transform block tries to maximize the number of zeros at the beginning of the scan. High-frequency coefficients (i.e. coefficient at the bottom-right of the transform block) generally have the higher probability to be zero.
For rectangular blocks, there are more zero coefficients in the longer dimension of the block. According to an embodiment of the present disclosure, the size or shape of the TSBs can be adapted to the statistics of such block.
For example, in Figure 10, a vertical 2x8 TSBs is used in a rectangular block with a greater width than height.

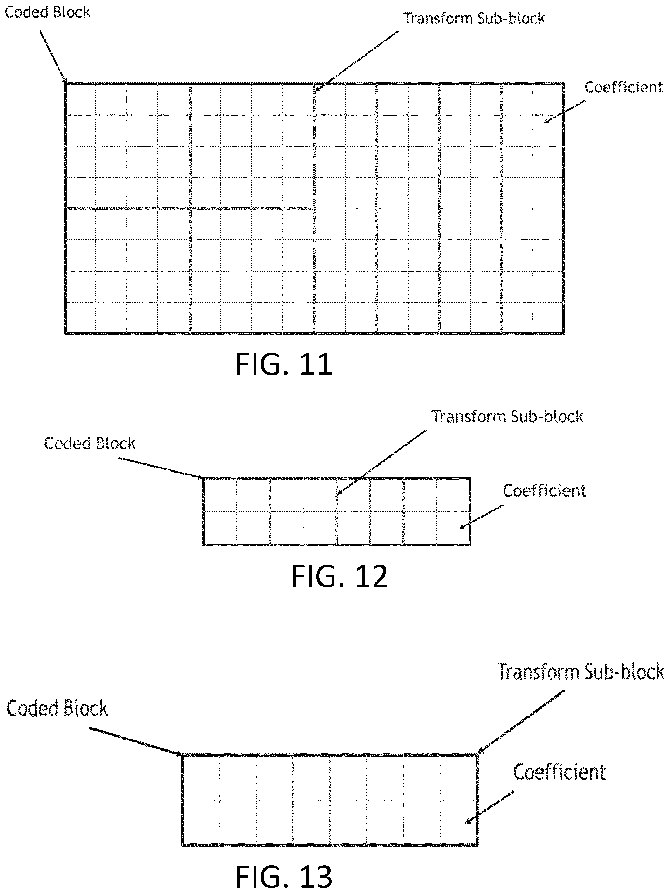

One impact of this solution, is that the size or shape of the TSB for the low frequency coefficients is also modified, even if the probability to have zero coefficients in the low frequency part of the block is the same for square and rectangular blocks.
According to another embodiment of the present disclosure, as illustrated in Figure 11, a mix of square and rectangular TSB is used. In Figure 11, for the low frequency part of the block (the top-left greater square inside the block, in a 8x16 block, it's the top-left 8x8 square part), square 4x4 TSB are use, and 2x8 or 8x2 TSBs are used for the remaining high frequency part of the block. At least one such embodiment has increased compression efficiency.

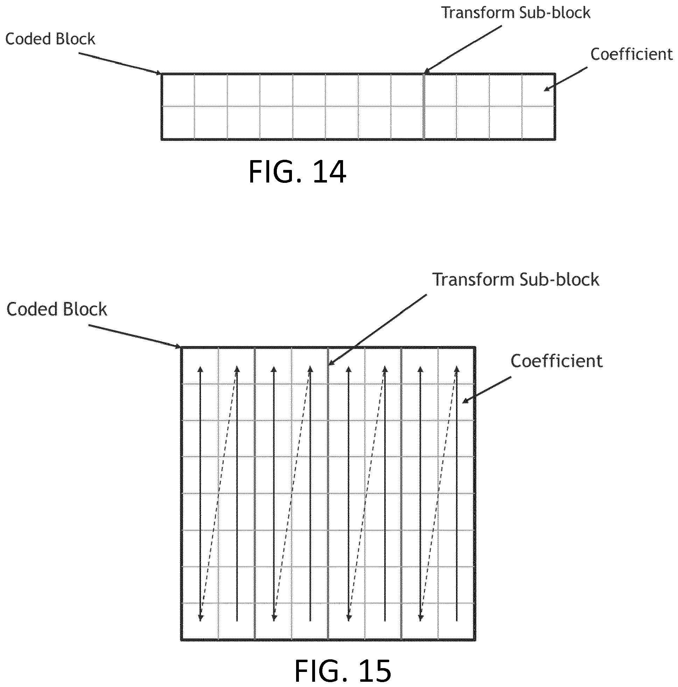

In JEM6.0, some chroma blocks may have a size of 2xN or Nx2. For this kind of blocks, a 2x2 TSB is used as illustrated in Figure 12.
The inventors have recognized that the coding of such block is typically inefficient because of the additional significance map syntax to code. Indeed, a flag is coded for each TSB to specify the significance of this TSB. In a 4x4 TSB, a flag is coded for 16 coefficients; while in a 2x2 TSB, a flag is coded for 4 coefficients.
By using 2x8 or 8x2 TSBs, the inventors have recognized that at least one embodiment can reduce the cost of the syntax and then improve the coding efficiency. Figure 13 illustrates such an embodiment wherein the TSB is of shape 2x8, that is a same shape as the transform block 2x8. In this way, only one Coded block flag is coded for the 16 coefficients.
In a general way, for blocks 2xN, with N a multiple of 8, 2x8 TSBs are used in at least one implementation. If N is not a multiple of 8, a mix of 2x8, 2x4 or 2x2 TSBs are used in at least one implementation. An example is illustrated in Figure 14 showing for a transform block of size 2x12, an arrangement of a TSB of size 2x8 and a TSB of size 2x4.

In HEVC, the scanning order of coefficient and TSB depends on intra prediction mode for intra blocks. For horizontal modes, a vertical scan is used; while for vertical modes, a horizontal scan is used. For other intra prediction modes or inter mode, the diagonal scan is used.
This scan adaptation is used to attempt to increase the number of zero coefficients at the beginning of the scan.
According to the present principle, at least one implementation improves this adaptation by also modifying the Transform Sub-block size, according to the intra prediction modes.
Such an adaptation can be performed for all shapes of transform block.
For example, 2x8 TSBs with a vertical scan for an intra block coded with a horizontal direction can be used.
In a block coded with a horizontal intra mode, the coefficients at the right part of the block typically have a higher probability to be zero. Figure 15 illustrates such an adaptation by using vertical 2x8 Transform Sub-blocks for the vertical scan. At least one implementation increases the number of zero coefficients at the beginning of the scan.
In the same way, for intra blocks coded with a vertical intra mode, a horizontal scan with horizontal TSBs is used in at least one embodiment.

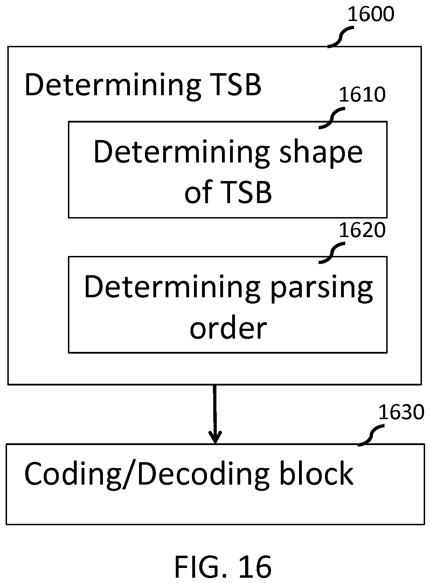

Figure 16 illustrates an exemplary method for coding or decoding a video according to an embodiment of the present disclosure. In step 1600, at least one transform subblock in a block of a picture of the video to encode or decode is determined.
In a preferred embodiment, the transform subblock comprises 16 coefficients. According to this embodiment, existing syntax and decoding process used in common video compression standards can be re-used without necessitating any modifications.
According to an embodiment, step 1600 comprises determining a shape of the transform subblock. Depending on the size of the block, i.e. a number of transform coefficients comprised in the block, the transform subblock may comprise one or more transform subblock. When the block comprises more than one transform subblock, determining a shape of the transform subbock implicitly comprises determining an arrangement of transform subblocks in the block to code or to decode.
According to the embodiment described here, the shape of the transform subblock is determined according to any one the embodiments described above.
For example, if the block has a rectangular shape with a first dimension greater than a second dimension, the size or shape of the transform subblocks along the first dimension is smaller than the size of the transform subblocks along the second dimension.
According to another example, the shape of said at least one transform subblock is based on a position of said at least one transform subblock in said block. For instance, transform subblocks comprising high frequency coefficients have a rectangular shape, while transform subblocks comprising low frequency coefficients have a square shape.
According to another example, the shape of said at least one transform subblock is based on an intra prediction mode used for predicting the block.
At step 1630, a parsing order of the transform coefficients in the block for coding or decoding is determined, according to the arrangement and shape of the transform subblocks in the block.
For example, when the shape of the transform subblocks in the block depends on the intra prediction mode used for predicting the block, for instance an horizontal intra prediction mode, the transform subblocks have a vertical rectangular shape and the parsing order of transform coefficient of the block is a vertical bottom-up right to left parsing starting at a bottom right coefficient in said block, as illustrated in figure 15.

In an other example, if the block is predicted according to a vertical intra prediction mode, the transform subblocks have an horizontal rectangular shape and the parsing order of transform coefficients of the block is an horizontal right to left bottom-up parsing starting at a bottom right coefficient in said block.
According to another embodiment, the parsing order is determined so as to favor the occurrence of longer strings of zeros at the beginning of a scan.
At step 1630, the block is coded or decoded using the determined arrangement of transform subblocks in the block and parsing order.

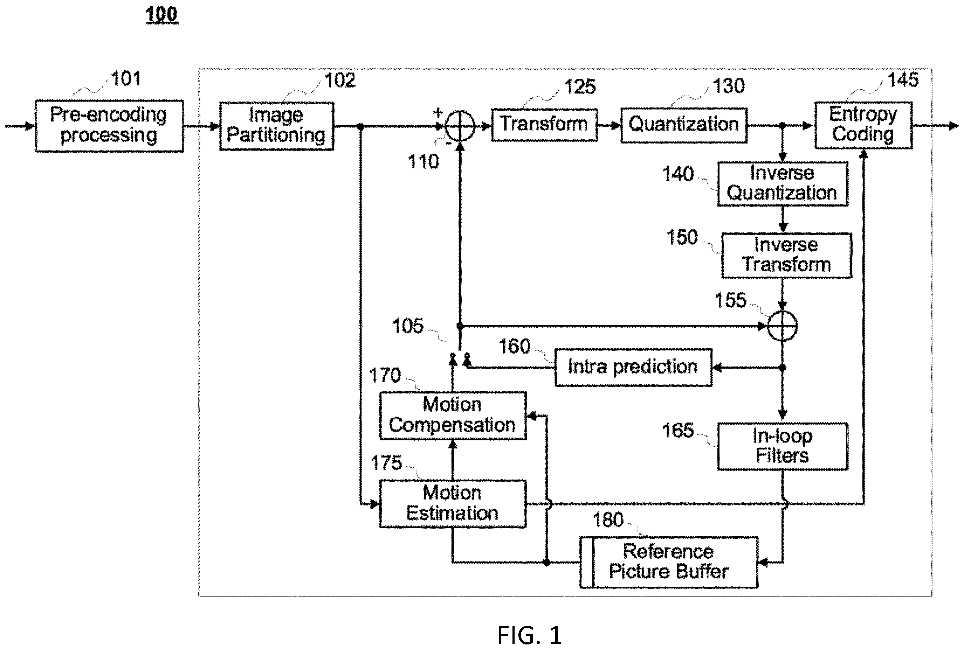

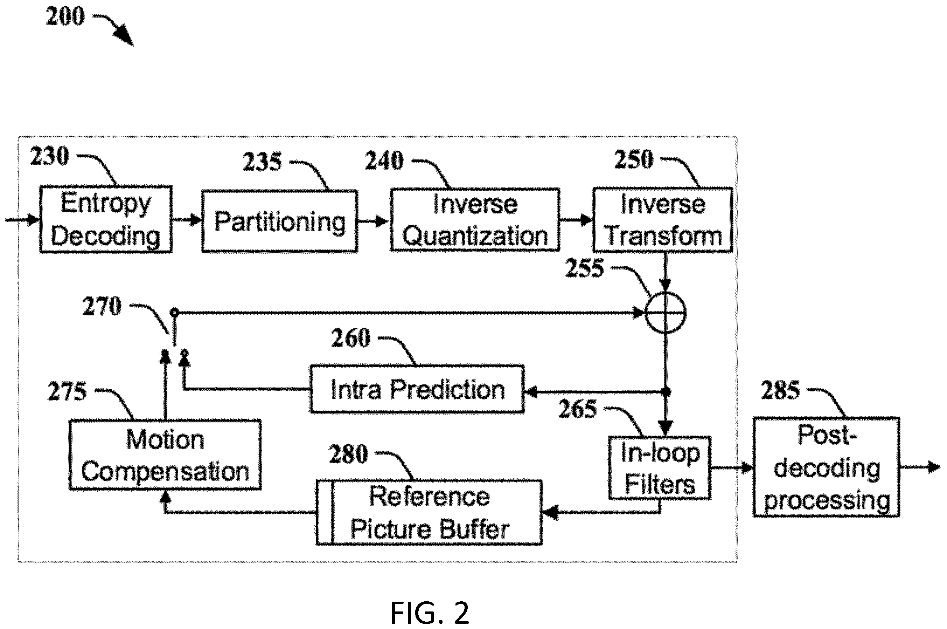

This document describes a variety of aspects, including tools, features, embodiments, models, approaches, etc. Many of these aspects are described with specificity and, at least to show the individual characteristics, are often described in a manner that may sound limiting. However, this is for purposes of clarity in description, and does not limit the application or scope of those aspects. Indeed, all of the different aspects can be combined and interchanged to provide further aspects. Moreover, the aspects can be combined and interchanged with aspects described in earlier filings as well.
The aspects described and contemplated in this document can be implemented in many different forms. FIGs. 1, 2 and 17 below provide some embodiments, but other embodiments are contemplated and the discussion of FIGs. 1, 2 and 17 does not limit the breadth of the implementations. At least one of the aspects generally relates to video encoding and decoding, and at least one other aspect generally relates to transmitting a bitstream generated or encoded. These and other aspects can be implemented as a method, an apparatus, a computer readable storage medium having stored thereon instructions for encoding or decoding video data according to any of the methods described, and/or a computer readable storage medium having stored thereon a bitstream generated according to any of the methods described.
In the present application, the terms "reconstructed" and "decoded" may be used interchangeably, the terms "pixel" and "sample" may be used interchangeably, the terms "image," "picture" and "frame" may be used interchangeably. Usually, but not necessarily, the term "reconstructed" is used at the encoder side while "decoded" is used at the decoder side. Various methods are described above, and each of the methods comprises one or more steps or actions for achieving the described method. Unless a specific order of steps or actions is required for proper operation of the method, the order and/or use of specific steps and/or actions may be modified or combined.
Various methods and other aspects described in this document can be used to modify modules, such as, for example, the entropy coding 145, entropy decoding 230, image partitioning 102, and partitioning 235 modules, of a JVET *("*JVET common test conditions and software reference configurations" Document: JVET-B1010, Joint Video Exploration Team (JVET) of ITU-T SG16 WP3 and ISO/IEC JTC1/SC29/WG11, 2nd Meeting: San Diego, USA, 20-26 February 2016*)* or HEVC encoder 100 and decoder 200 as shown in FIG. 1 and FIG. 2.
Moreover, the present aspects are not limited to JVET or HEVC, and can be applied, for example, to other standards and recommendations, whether pre-existing or future-developed, and extensions of any such standards and recommendations (including JVET and HEVC). Unless indicated otherwise, or technically precluded, the aspects described in this document can be used individually or in combination.
Various numeric values are used in the present document. The specific values are for exemplary purposes and the aspects described are not limited to these specific values.
FIG. 1 illustrates an exemplary encoder 100 according to an embodiment of the present disclosure, wherein any one of the embodiments described above can be implemented. Variations of this encoder 100 are contemplated, but the encoder 100 is described below for purposes of clarity without describing all expected variations.

Before being encoded, the video sequence may go through pre-encoding processing (101), for example, applying a color transform to the input color picture (e.g., conversion from RGB 4:4:4 to YCbCr 4:2:0), or performing a remapping of the input picture components in order to get a signal distribution more resilient to compression (for instance using a histogram equalization of one of the color components). Metadata can be associated with the preprocessing, and attached to the bitstream.
In the exemplary encoder 100, a picture is encoded by the encoder elements as described below. The picture to be encoded is partitioned (102) and processed in units of, for example, CUs. Each unit is encoded using, for example, either an intra or inter mode. When a unit is encoded in an intra mode, it performs intra prediction (160). In an inter mode, motion estimation (175) and compensation (170) are performed. The encoder decides (105) which one of the intra mode or inter mode to use for encoding the unit, and indicates the intra/inter decision by, for example, a prediction mode flag. Prediction residuals are calculated, for example, by subtracting (110) the predicted block from the original image block.
The prediction residuals are then transformed (125) and quantized (130). The quantized transform coefficients, as well as motion vectors and other syntax elements, are entropy coded (145) to output a bitstream. The encoder can skip the transform and apply quantization directly to the non-transformed residual signal. The encoder can bypass both transform and quantization, i.e., the residual is coded directly without the application of the transform or quantization processes.
The encoder decodes an encoded block to provide a reference for further predictions. The quantized transform coefficients are de-quantized (140) and inverse transformed (150) to decode prediction residuals. Combining (155) the decoded prediction residuals and the predicted block, an image block is reconstructed. In-loop filters (165) are applied to the reconstructed picture to perform, for example, deblocking/SAO (Sample Adaptive Offset) filtering to reduce encoding artifacts. The filtered image is stored at a reference picture buffer (180).

FIG. 2 illustrates a block diagram of an exemplary video decoder 200 wherein any one of the embodiments described above can be implemented. In the exemplary decoder 200, a bitstream is decoded by the decoder elements as described below. Video decoder 200 generally performs a decoding pass reciprocal to the encoding pass as described in FIG. 1. The encoder 100 also generally performs video decoding as part of encoding video data.
In particular, the input of the decoder includes a video bitstream, which can be generated by video encoder 100. The bitstream is first entropy decoded (230) to obtain transform coefficients, motion vectors, and other coded information. The picture partition information indicates how the picture is partitioned. The decoder may therefore divide (235) the picture according to the decoded picture partitioning information. The transform coefficients are de-quantized (240) and inverse transformed (250) to decode the prediction residuals. Combining (255) the decoded prediction residuals and the predicted block, an image block is reconstructed. The predicted block can be obtained (270) from intra prediction (260) or motion-compensated prediction (i.e., inter prediction) (275). In-loop filters (265) are applied to the reconstructed image. The filtered image is stored at a reference picture buffer (280).
The decoded picture can further go through post-decoding processing (285), for example, an inverse color transform (e.g. conversion from YCbCr 4:2:0 to RGB 4:4:4) or an inverse remapping performing the inverse of the remapping process performed in the pre-encoding processing (101). The post-decoding processing can use metadata derived in the pre-encoding processing and signaled in the bitstream.

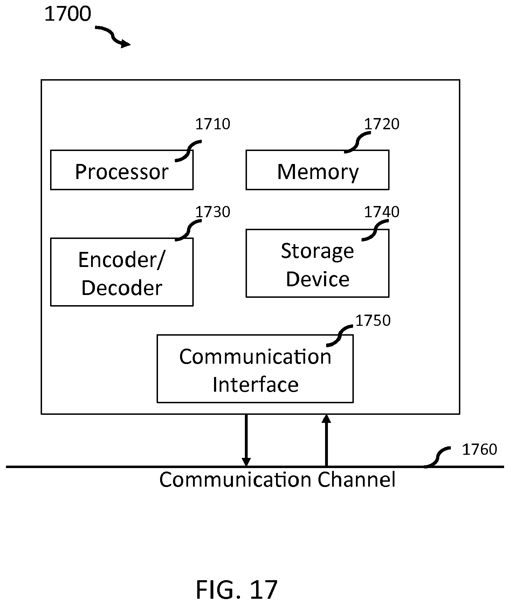

FIG. 17 illustrates a block diagram of an exemplary system in which various aspects and exemplary embodiments are implemented. System 1700 can be embodied as a device including the various components described below and is configured to perform one or more of the aspects described in this document. Examples of such devices, include, but are not limited to, personal computers, laptop computers, smartphones, tablet computers, digital multimedia set top boxes, digital television receivers, personal video recording systems, connected home appliances, and servers. System 1700 can be communicatively coupled to other similar systems, and to a display via a communication channel as shown in FIG. 17 and as known by those skilled in the art to implement the various aspects described in this document.
The system 1700 can include at least one processor 1710 configured to execute instructions loaded therein for implementing the various aspects described in this document. Processor 1710 can include embedded memory, input output interface, and various other circuitries as known in the art. The system 1700 can include at least one memory 1720 (e.g., a volatile memory device, a non-volatile memory device). System 1700 can include a storage device 1720, which can include non-volatile memory, including, but not limited to, EEPROM, ROM, PROM, RAM, DRAM, SRAM, flash, magnetic disk drive, and/or optical disk drive. The storage device 1740 can include an internal storage device, an attached storage device, and/or a network accessible storage device, as non-limiting examples. System 1700 can include an encoder/decoder module 1030 configured to process data to provide an encoded video or decoded video.
Encoder/decoder module 1730 represents the module(s) that can be included in a device to perform the encoding and/or decoding functions. As is known, a device can include one or both of the encoding and decoding modules. Additionally, encoder/decoder module 1730 can be implemented as a separate element of system 1700 or can be incorporated within processors 1710 as a combination of hardware and software as known to those skilled in the art.
Program code to be loaded onto processors 1710 to perform the various aspects described in this document can be stored in storage device 1740 and subsequently loaded onto memory 1720 for execution by processors 1710. In accordance with the exemplary embodiments, one or more of the processor(s) 1710, memory 1720, storage device 1740, and encoder/decoder module 1730 can store one or more of the various items during the performance of the processes described in this document, including, but not limited to the input video, the decoded video, the bitstream, equations, formulas, matrices, variables, operations, and operational logic.
The system 1700 can include communication interface 1750 that enables communication with other devices via communication channel 1760. The communication interface 1750 can include, but is not limited to, a transceiver configured to transmit and receive data from communication channel 1760. The communication interface can include, but is not limited to, a modem or network card and the communication channel can be implemented within a wired and/or a wireless medium. The various components of system 1700 can be connected or communicatively coupled together using various suitable connections, including, but not limited to internal buses, wires, and printed circuit boards.
The exemplary embodiments can be carried out by computer software implemented by the processor 1710 or by hardware, or by a combination of hardware and software. As a non-limiting example, the exemplary embodiments can be implemented by one or more integrated circuits. The memory 1720 can be of any type appropriate to the technical environment and can be implemented using any appropriate data storage technology, such as optical memory devices, magnetic memory devices, semiconductor-based memory devices, fixed memory, and removable memory, as non-limiting examples. The processor 1710 can be of any type appropriate to the technical environment, and can encompass one or more of microprocessors, general purpose computers, special purpose computers, and processors based on a multicore architecture, as non-limiting examples.
The implementations and aspects described herein can be implemented in, for example, a method or a process, an apparatus, a software program, a data stream, or a signal. Even if only discussed in the context of a single form of implementation (for example, discussed only as a method), the implementation of features discussed can also be implemented in other forms (for example, an apparatus or program). An apparatus can be implemented in, for example, appropriate hardware, software, and firmware. The methods can be implemented in, for example, an apparatus such as, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.
Reference to "one embodiment" or "an embodiment" or "one implementation" or "an implementation", as well as other variations thereof, mean that a particular feature, structure, characteristic, and so forth described in connection with the embodiment is included in at least one embodiment. Thus, the appearances of the phrase "in one embodiment" or "in an embodiment" or "in one implementation" or "in an implementation", as well any other variations, appearing in various places throughout this document are not necessarily all referring to the same embodiment.
Additionally, this document may refer to "determining" various pieces of information. Determining the information can include one or more of, for example, estimating the information, calculating the information, predicting the information, or retrieving the information from memory.
Further, this document may refer to "accessing" various pieces of information. Accessing the information can include one or more of, for example, receiving the information, retrieving the information (for example, from memory), storing the information, processing the information, transmitting the information, moving the information, copying the information, erasing the information, calculating the information, determining the information, predicting the information, or estimating the information.
Additionally, this document may refer to "receiving" various pieces of information. Receiving is, as with "accessing", intended to be a broad term. Receiving the information can include one or more of, for example, accessing the information, or retrieving the information (for example, from memory). Further, "receiving" is typically involved, in one way or another, during operations such as, for example, storing the information, processing the information, transmitting the information, moving the information, copying the information, erasing the information, calculating the information, determining the information, predicting the information, or estimating the information.
As will be evident to one of ordinary skill in the art, implementations can produce a variety of signals formatted to carry information that can be, for example, stored or transmitted. The information can include, for example, instructions for performing a method, or data produced by one of the described implementations. For example, a signal can be formatted to carry the bitstream of a described embodiment. Such a signal can be formatted, for example, as an electromagnetic wave (for example, using a radio frequency portion of spectrum) or as a baseband signal. The formatting can include, for example, encoding a data stream and modulating a carrier with the encoded data stream. The information that the signal carries can be, for example, analog or digital information. The signal can be transmitted over a variety of different wired or wireless links, as is known. The signal can be stored on a processor-readable medium.

We have described a number of embodiments. These embodiments provide, at least, for the following generalized inventions and claims, including all combinations, across various different claim categories and types:
- Adapting/modifying/determining a shape and/or size of a block of transform coefficients according to any of the embodiments discussed, including combinations of embodiments.
- Adapting/modifying/determining a shape and/or size of a transform sub-block
   ∘ Wherein the adapting depends on the size of a block,
   ∘ Wherein transform sub-block sizes are different inside a non-square coding block,
   ∘ Wherein transform sub-blocks sizes are non-square, including for example 2xM where M>2 and can be, for example, 8,
   ∘ Wherein transform sub-block sizes are selected that reduce overhead associated with syntax that is coded for each transform sub-block,
   ∘ Wherein transform sub-block sizes are selected based on intra-prediction modes,
   ∘ Wherein transform sub-block sizes are selected based on scanning directions of intra-prediction modes,
   ∘ Wherein transform sub-block sizes are selected that tend to favor the occurrence of longer strings of zeros at the beginning of a scan,
- Adapting/modifying/determining a shape and/or size of a block of transform coefficients according to any of the embodiments discussed, including combinations of embodiments.
- Enabling one or more of the described embodiments for adapting a shape and/or size of a transform sub-block used at an encoder and/or a decoder.
- Inserting in the signaling syntax elements that indicate block sizes, such as transform sub-block sizes, as described in one or more embodiments.
- Inserting in the signaling syntax elements that enable a decoder to identify a block size, such as a transform sub-block size, as described in one or more embodiments.
- A bitstream or signal that includes one or more of the described syntax elements, or variations or combinations thereof, for describing a block size of transform coefficients.
- Creating and/or transmitting and/or receiving and/or decoding a bitstream or signal that includes one or an indication (syntax or otherwise) of block sizes for transform coefficients according to one or more, of combinations or variations thereof, of the described embodiments.
- A TV, set-top box, cell phone, tablet, or other electronic device that performs encoding and/or decoding of an image based on a block size for transform coefficients according to one or more, or variations or combinations, of the described embodiments.
- A TV, set-top box, cell phone, tablet, or other electronic device that performs encoding and/or decoding of an image based on a block size for transform coefficients according to one or more, or variations or combinations, of the described embodiments, and that displays (e.g. using a monitor, screen, or other type of display) a resulting image.
- A TV, set-top box, cell phone, tablet, or other electronic device that tunes (e.g. using a tuner) a channel to receive a signal including an encoded image, and decodes the image based on a block size for transform coefficients according to one or more, or variations or combinations, of the described embodiments.
- A TV, set-top box, cell phone, tablet, or other electronic device that receives (e.g. using an antenna) a signal over the air that includes an encoded image, and decodes the image based on a block size for transform coefficients according to one or more, or variations or combinations, of the described embodiments.

Various other generalized, as well as particularized, inventions and claims are also supported and contemplated throughout this disclosure.

## Claims

1. A method for coding a video comprising:
- determining (1600) at least one transform subblock in a block of a picture of the video,
- coding (1630) said block based at least on said at least one transform subblock,
wherein determining at least one transform subblock depends on a shape of said block.

2. An apparatus for coding a video comprising:
- means (1710, 1730) for determining at least one transform subblock in a block of a picture of the video,
- means (1710, 1730) for coding said block based at least on said at least one transform subblock,
wherein determining at least one transform subblock depends on a shape of said block.

3. A method for decoding a video comprising:
- determining (1600) at least one transform subblock in a block of a pictureof the video,
- decoding (1630) said block based at least on said at least one transform subblock,
wherein determining at least one transform subblock depends on a shape of said block.

4. An apparatus for decoding a video comprising:
- means (1710, 1730) for determining at least one transform subblock in a block of a picture of the video,
- means (1710, 1730) for decoding said block based at least on said at least one transform subblock,
wherein determining at least one transform subblock depends on a shape of said block.

5. The method according to claim 1 or 3, or the apparatus according to claim 2 or 4, wherein determining at least one transform subblock in a block of said picture comprises:
- determining a shape of said at least one transform subblock,
- determining a parsing order of transform coefficients in said block for coding or decoding, according to an arrangement of said at least one transform subblock in said block.

6. The method according to any one of claims 1, 3 or 5, or the apparatus according to any one of claims 2, 4 or 5, wherein at least one transform subblock comprises 16 transform coefficients.

7. The method according to any one of claims 1, 3 or 5-6, or the apparatus according to any one of claims 2, 4 or 5-6, wherein if said block has a rectangular shape with a first dimension greater than a second dimension, determining at least one transform subblock comprises determining an arrangement of transform subblocks in said block wherein the size of the transform subblocks along the first dimension is smaller than the size of the transform subblocks along the second dimension.

8. The method according to any one of claims 1, 3 or 5-6, or the apparatus according to any one of claims 2, 4 or 5-6, wherein if the block has a rectangular shape with a width greater that its height, determining at least one transform subblock comprises determining an arrangement of transform subblocks in said block wherein transform subblocks are vertical 2x8 subblocks.

9. The method according to any one of claims 1, 3 or 5-8, or the apparatus according to any one of claims 2, 4 or 5-8, wherein determining at least one transform subblock comprises determining a shape of said at least one transform subblock and wherein said shape of said at least one transform subblock is based on a position of said at least one transform subblock in said block.

10. The method according to any one of claims 1, 3 or 5-8, or the apparatus according to any one of claims 2, 4 or 5-8, wherein if said block has a shape of 2xN or Nx2 coefficients, with N being an integer, determining said at least one transform subblock comprises determining an arrangement in said block of at least one transform subblock of shape 2x8 or 8x2 coefficients.

11. The method or the apparatus according to claim 10, wherein if the N is not a multiple of 8, said arrangement in said block comprises transform subblocks of mixed sizes.

12. The method according to any one of claims 1, 3 or 5-8, or the apparatus according to any one of claims 2, 4 or 5-8, wherein determining at least one transform subblock in a block of said picture is further based on an intra prediction mode used for predicting said block.

13. The method or the apparatus according to claim 12, wherein if said block is predicted according to an horizontal intra prediction mode, determining said at least one transform subblock comprises determining an arrangement in said block of said at least one transform subblock having a vertical rectangular shape and determining a parsing order of transform coefficients of said block wherien said parsing order is a vertical bottom-up right to left parsing starting at a bottom right coefficient in said block.

14. The method or the apparatus according to claim 12, wherein if said block is predicted according to a vertical intra prediction mode, determining said at least one transform subblock comprises determining an arrangement in said block of said at least one transform subblock having an horizontal rectangular shape and determining a parsing order of transform coefficients of said block wherien said parsing order is an horizontal right to left bottom-up parsing starting at a bottom right coefficient in said block.

15. A computer program comprising software code instructions for performing the method according to any one of claims 1 or 5 to 13, when the computer program is executed by a processor.
